# FASCICULE DE BREVET EUROPEEN

(11) **EP 2 520 201 B1**
(45) Date de publication et mention de la délivrance du brevet: **05.11.2014**
(21) Numéro de dépôt: 12166467.6
(22) Date de dépôt: 02.05.2012
(51) Int. Cl.: A47J 27/04, A47J 27/212

(54) **Boîtier et cuiseur vapeur électrique comportant plusieurs programmes de cuisson**
Gehäuse und elektrisches Dampfkochgerät, das mehrere Kochprogramme umfasst
Housing and electric steam cooker cooking comprising a plurality of cooking programmes

(30) Priorité: 06.05.2011 FR 1153921
(43) Date de publication de la demande: 07.11.2012
(73) Titulaire: SEB S.A., 69130 Ecully (FR)
(72) Inventeur: Dirand, Pascal, 21160 Marsannay-La-Côte (FR); Petit, Michel, 21000 Dijon (FR); Reiner, Guillaume, 38000 Grenoble (FR)
(74) Mandataire: Cémeli, Eric Philippe Laurent

(56) Documents cités:
- EP-A1- 1 449 468
- WO-A1-00/65967
- GB-A- 2 358 788
- GB-A- 2 435 812

## Description

La présente invention concerne le domaine technique des appareils électriques de cuisson à la vapeur comportant un réservoir d'eau au moins partiellement transparent et/ou translucide.

La présente invention concerne notamment les cuiseurs vapeurs électriques étagés comportant plusieurs récipients de cuisson superposés disposés sur une base chauffante comprenant le réservoir d'eau.

Il est connu du document EP 1 449 468 un cuiseur vapeur électrique dans lequel un dispositif d'éclairage est prévu pour éclairer au moins partiellement une partie transparente ou translucide du réservoir d'eau.

Toutefois ce document n'envisage pas particulièrement de dispositions visant à utiliser différents programmes de cuisson.

Un but de la présente invention est de proposer un boitier de cuiseur vapeur électrique utilisant différents programmes de cuisson, qui soit simple à utiliser.

Un autre but de la présente invention est de proposer un cuiseur vapeur électrique utilisant différents programmes de cuisson, qui soit simple à utiliser.

Ces buts sont atteints avec un boîtier de cuiseur vapeur électrique, comportant un réservoir d'eau associé à un moyen de chauffe, le réservoir d'eau présentant au moins une partie latérale transparente et/ou translucide, un premier dispositif d'éclairage étant prévu pour éclairer au moins partiellement le réservoir d'eau, ledit boîtier comportant un dispositif de commande présentant au moins une première configuration de fonctionnement mettant en oeuvre le premier dispositif d'éclairage et une deuxième configuration de fonctionnement mettant en oeuvre un deuxième dispositif d'éclairage prévu pour éclairer au moins partiellement le réservoir d'eau, la couleur d'éclairage du premier dispositif d'éclairage étant différente de la couleur d'éclairage du deuxième dispositif d'éclairage, du fait que le dispositif de commande comporte un organe de commande prévu pour sélectionner des programmes de cuisson, et que le réservoir d'eau est éclairé par le ou les dispositifs d'éclairage correspondant au programme de cuisson sélectionné. L'éclairage du réservoir d'eau ainsi obtenu correspond au programme de cuisson sélectionné et forme un détrompeur visuel pour l'utilisateur. Les risques de cuire les aliments de manière insuffisante ou excessive sont réduits car l'utilisateur peut réaliser plus facilement que le programme de cuisson sélectionné correspond bien au programme de cuisson envisagé, le détrompeur visuel formé par la ou les parties éclairées du réservoir d'eau étant particulièrement bien visible.

Avantageusement, la partie transparente et/ou translucide présente un espace s'étendant entre une paroi latérale externe et une paroi latérale interne du réservoir d'eau, les premier et deuxième dispositifs d'éclairage étant agencés dans l'espace. Cette disposition permet de simplifier l'implantation des dispositifs d'éclairage.

Avantageusement alors, pour un meilleur éclairage du réservoir d'eau, une paroi de diffusion de lumière est agencée entre la paroi latérale interne et les premier et deuxième dispositifs d'éclairage.

Avantageusement, pour un meilleur éclairage du réservoir d'eau, le premier dispositif d'éclairage et le deuxième dispositif d'éclairage utilisent chacun plusieurs organes d'éclairage. Selon une forme de réalisation préférée, lesdits organes d'éclairage sont montés en série.

Selon un mode de réalisation avantageux, le premier dispositif d'éclairage et le deuxième dispositif d'éclairage utilisent chacun au moins un organe d'éclairage de type diode électroluminescente. Ce type d'organe d'éclairage présente une construction compacte et est simple à utiliser.

Avantageusement alors, le ou au moins l'un des organes d'éclairage du premier dispositif d'éclairage et le ou au moins l'un des organes d'éclairage du deuxième dispositif d'éclairage appartiennent à au moins une diode électroluminescente trichromique de type RGB. Les diodes électroluminescentes trichromique de type RGB comportent trois composants indépendants donnant chacun une couleur d'éclairage distincte. Ce type d'organe d'éclairage présente une construction très compacte.

Avantageusement, le dispositif de commande présente une troisième configuration de fonctionnement mettant en oeuvre un troisième dispositif d'éclairage prévu pour éclairer au moins partiellement le réservoir d'eau, la couleur d'éclairage du troisième dispositif d'éclairage étant différente de la couleur d'éclairage du premier dispositif d'éclairage et de la couleur d'éclairage du deuxième dispositif d'éclairage.

Avantageusement alors, le troisième dispositif d'éclairage utilise au moins un organe d'éclairage de type diode électroluminescente.

Avantageusement alors, le ou au moins l'un des organes d'éclairage du premier dispositif d'éclairage, le ou au moins l'un des organes d'éclairage du deuxième dispositif d'éclairage et le ou au moins l'un des organes d'éclairage du troisième dispositif d'éclairage appartiennent à au moins une diode électroluminescente trichromique de type RGB.

Avantageusement encore, le dispositif de commande présente une quatrième configuration de fonctionnement mettant en oeuvre le premier dispositif d'éclairage et le deuxième dispositif d'éclairage.

Avantageusement encore, le dispositif de commande présente une cinquième configuration de fonctionnement mettant en oeuvre le deuxième dispositif d'éclairage à puissance réduite et le troisième dispositif d'éclairage à puissance réduite.

Avantageusement encore, le dispositif de commande présente une sixième configuration de fonctionnement mettant en oeuvre le deuxième dispositif d'éclairage à pleine puissance et le troisième dispositif d'éclairage à puissance réduite.

Ces dispositions permettent de mettre en oeuvre davantage de programmes de fonctionnement, sans augmenter le nombre de dispositifs d'éclairage.

Selon un mode de réalisation avantageux permettant une utilisation très intuitive de l'appareil, l'organe de commande est susceptible d'occuper plusieurs positions correspondant chacune à l'une des configurations de fonctionnement précitées, le dispositif de commande comprenant des indicateurs colorés indiquant chacun une des positions de l'organe de commande, la couleur de chacun des indicateurs colorés correspondant à la couleur d'éclairage du réservoir d'eau définie par la configuration de fonctionnement sélectionnée par la position de l'organe de commande. Cette disposition facilite la mémorisation des associations entre configurations de commande et couleurs d'éclairage du réservoir d'eau.

Avantageusement encore, l'éclairage du réservoir d'eau est interrompu lorsque le programme de cuisson associé à la configuration de fonctionnement sélectionnée est achevé.

Avantageusement encore, l'éclairage du réservoir d'eau est poursuivi de manière intermittente lorsque le programme de cuisson associé à la configuration de fonctionnement sélectionnée est achevé et qu'un maintien au chaud a été sélectionné.

Cet objet est atteint aussi avec un cuiseur vapeur électrique comprenant un boîtier comportant un réservoir d'eau associé à un moyen de chauffe, et au moins un récipient de cuisson, dans lequel le boîtier est conforme à l'une au moins des caractéristiques précitées.

L'invention sera mieux comprise à l'étude d'un exemple de réalisation, pris à titre nullement limitatif, illustré dans les figures annexées, dans lesquelles :
- la figure 1 est une vue en éclaté d'un cuiseur vapeur électrique comportant un boîtier selon l'invention,
- la figure 2 est une vue en élévation et en coupe transversale du boîtier illustré sur la figure 1,
- la figure 3 est une vue en élévation et en coupe longitudinale du boîtier illustré sur les figures 1 et 2,
- la figure 4 est une vue de dessus en perspective du boîtier illustré sur les figures 1 et 2, dans laquelle la paroi supérieure du boîtier a été retirée,
- la figure 5 est une vue agrandie d'une partie du boîtier illustrée sur la figure 4, montrant les dispositifs d'éclairage,
- la figure 6 est une vue du panneau de commande du boîtier illustré sur les figures 1 à 5,
- la figure 7 illustre une partie du montage du dispositif d'éclairage monté dans le boîtier illustré sur les figures 1 à 6,
- la figure 8 illustre un accessoire de cuisson pouvant être utilisé dans l'un des bols de cuisson du cuiseur vapeur électrique illustré sur la figure 1.

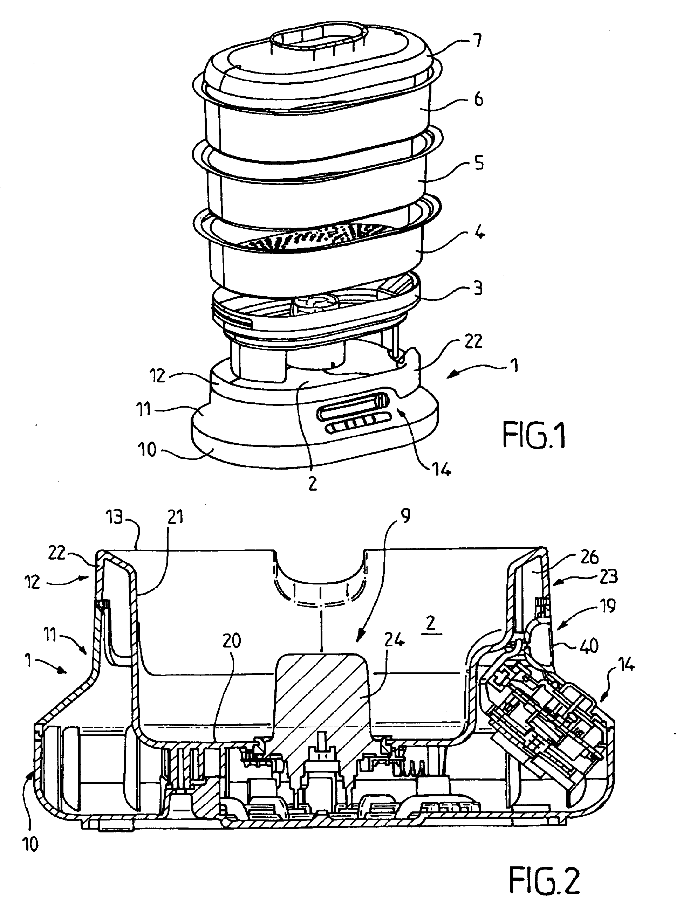

L'appareil électrique de cuisson illustré sur la figure 1 est un cuiseur vapeur électrique comprenant un boitier 1 comportant un réservoir d'eau 2 associé à un moyen de chauffe 9 prévu pour évaporer l'eau disposée dans le réservoir d'eau. Le boitier 1 porte un bac récupérateur à jus 3 surmonté de trois récipients de cuisson 4, 5, 6 et d'un couvercle 7. Un accessoire de cuisson 8 prévu pour la cuisson de portions séparées peut être disposé dans l'un des récipients de cuisson 4, 5, 6. Les récipients de cuisson 4, 5, 6 superposés sont à fond perforé.

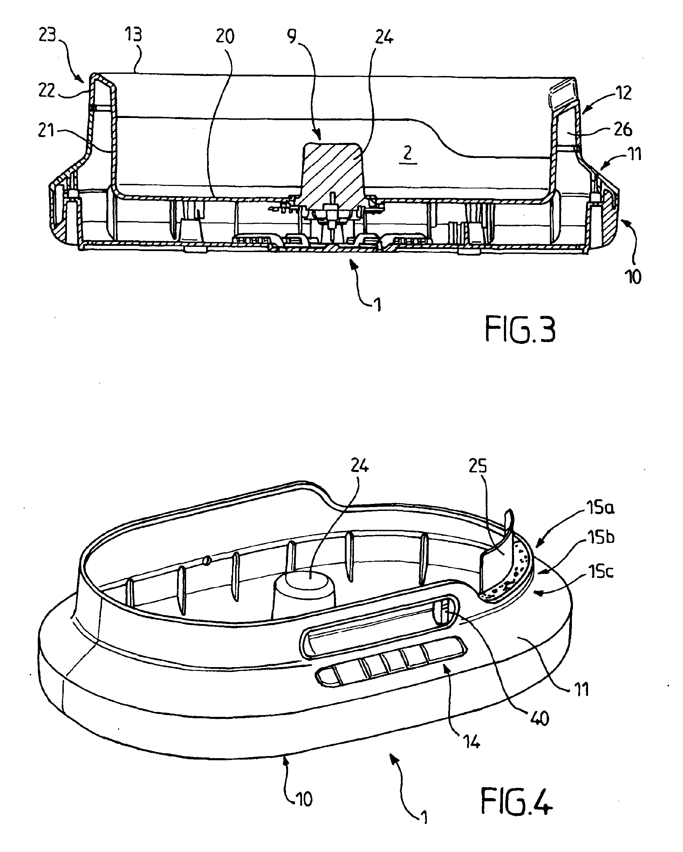

Tel que mieux visible sur les figures 2 et 3, le boitier 1 comporte une base 10 portant un bandeau 11 surmonté d'une pièce supérieure concave 12 formant le réservoir d'eau 2. La pièce supérieure concave 12 présente un fond 20 comportant une ouverture dans laquelle est monté un plot chauffant 24 formant le moyen de chauffe 9. La pièce supérieure concave 12 présente une paroi latérale interne 21 s'élevant à partir du fond 20 jusqu'à un bord supérieur 13 du boitier 1. La pièce supérieure concave 12 présente une paroi latérale externe 22 s'étendant entre le bord supérieur 13 et le bandeau 11. La paroi latérale externe 22 est annulaire et entoure la paroi latérale interne 21 sur toute la circonférence de la paroi latérale interne 21.

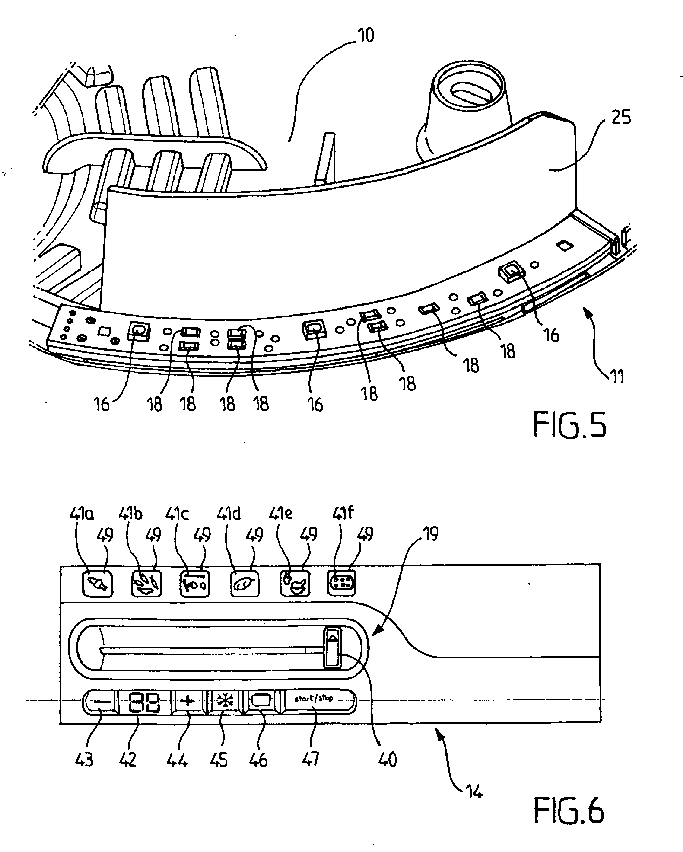

Le boitier 1 comporte un dispositif de commande 14, mieux visible sur les figures 4 et 6. Le dispositif de commande 14 est agencé principalement sur le bandeau 11. Le dispositif de commande 14 comporte un organe de commande 19 prévu pour sélectionner des programmes de cuisson. Le dispositif de commande 14 présente avantageusement un microcontrôleur portant un sélecteur actionné par l'organe de commande 19.

Dans l'exemple de réalisation illustré sur les figures, l'organe de commande 19 est formé par un curseur 40 linéaire susceptible de venir en regard de six pictogrammes 41a, 41b, 41c, 41d, 41e, 41f correspondant à six programmes de cuisson. Les pictogrammes 41a, 41b, 41c, 41d, 41e, 41f sont disposés sur la paroi latérale externe 22 de la pièce supérieure concave 12. Le dispositif de commande 14 comporte un afficheur 42 associé à deux touches de réglage 43, 44 prévues pour ajuster à la baisse ou à la hausse le temps de cuisson indiqué sur l'afficheur 42. Le dispositif de commande 14 comporte une touche de décongélation 45, une touche de maintien au chaud 46 et une touche marche/arrêt 47. Le microcontrôleur gère l'alimentation du moyen de chauffe 9 selon le programme de cuisson sélectionné par l'organe de commande 19, en prenant en compte le cas échéant l'actionnement de la touche de décongélation 45, et/ou de la touche de maintien au chaud 46.

La hauteur du bandeau 11 et de la paroi latérale externe 22 ne sont pas uniformes. Tel que montré sur les figures 1 à 4, le bandeau 11 présente une hauteur moins importante sur l'un des cotés du dispositif de commande 14. Corrélativement, la hauteur de la paroi latérale externe 22 est plus importante sur ce même coté du dispositif de commande 14.

La pièce supérieure concave 12 est avantageusement réalisée en matériau transparent et/ou translucide, par exemple en matière plastique telle que du polypropylène translucide.

Le réservoir d'eau 2 présente ainsi au moins une partie latérale transparente et/ou translucide 23.

Plus particulièrement dans l'exemple de réalisation illustré sur les figures, la partie latérale transparente et/ou translucide 23 est annulaire et s'étend sur toute la partie supérieure du réservoir d'eau 2. La partie latérale transparente et/ou translucide 23 présente un espace 26 s'étendant entre la paroi latérale externe 22 et la paroi latérale interne 21 du réservoir d'eau 2. Tel que visible sur les figures 2 et 3, l'espace 26 se prolonge entre la paroi latérale interne 21 et le bandeau 11 ainsi que la base 10.

Le boitier 1 comporte plusieurs dispositifs d'éclairage 15a, 15b, 15c prévus pour éclairer au moins partiellement le réservoir d'eau 2.

La couleur d'éclairage du premier dispositif d'éclairage 15a est différente de la couleur d'éclairage du deuxième dispositif d'éclairage 15b. La couleur d'éclairage du troisième dispositif d'éclairage 15c est différente de la couleur d'éclairage du premier dispositif d'éclairage 15a et de la couleur d'éclairage du deuxième dispositif d'éclairage 15b. La couleur d'éclairage du premier dispositif d'éclairage 15a est par exemple le bleu, la couleur d'éclairage du deuxième dispositif d'éclairage 15b est par exemple le rouge, la couleur d'éclairage du troisième dispositif d'éclairage 15c est par exemple le vert.

Dans l'exemple de réalisation illustré sur les figures, le premier dispositif d'éclairage 15a, le deuxième dispositif d'éclairage 15b et le troisième dispositif d'éclairage 15c sont agencés dans l'espace 26 s'étendant à l'intérieur de la double paroi définie par la paroi latérale externe 22 et la partie supérieure de la paroi latérale interne 21.

Selon une forme de réalisation avantageuse, le premier dispositif d'éclairage 15a, le deuxième dispositif d'éclairage 15b et le troisième dispositif d'éclairage 15c utilisent chacun au moins un organe d'éclairage 16 de type diode électroluminescente, ou LED.

Selon une forme de réalisation préférée, le ou au moins l'un des organes d'éclairage 16 du premier dispositif d'éclairage 15a, le ou au moins l'un des organes d'éclairage 16 du deuxième dispositif d'éclairage 15b, et le ou au moins l'un des organes d'éclairage du troisième dispositif d'éclairage 15c appartiennent à au moins une diode électroluminescente trichromique de type RGB 17, ou LED RGB. Les diodes électroluminescentes trichromiques de type RGB 17 comportent trois composants indépendants de type LED alimentés électriquement de manière indépendante donnant chacun une couleur d'éclairage distincte, soit rouge, soit vert, soit bleu.

Pour un meilleur éclairage du réservoir d'eau 2, le premier dispositif d'éclairage 15a, le deuxième dispositif d'éclairage 15b et le troisième dispositif d'éclairage 15c utilisent chacun plusieurs organes d'éclairage 16. Dans l'exemple de réalisation illustré sur les figures, le premier dispositif d'éclairage 15a, le deuxième dispositif d'éclairage 15b et le troisième dispositif d'éclairage 15c utilisent chacun trois organes d'éclairage 16, mieux visibles sur la figure 5.

Tel que mieux visible sur la figure 4, les dispositifs d'éclairage 15a, 15b, 15c sont montés sur le bandeau 11 latéralement par rapport au dispositif de commande 14 dans la zone de hauteur réduite. Une paroi de diffusion de lumière 25 s'élève latéralement derrière les dispositifs d'éclairage 15a, 15b, 15c. La paroi de diffusion de lumière 25 est incurvée à distance de la paroi latérale externe 22. La paroi de diffusion de lumière 25 est agencée entre la paroi latérale interne 21 et les dispositifs d'éclairage 15a, 15b, 15c. La paroi de diffusion de lumière 25 est issue du bandeau 11 et est réalisée en matériau opaque, par exemple en matière plastique telle que l'ABS.

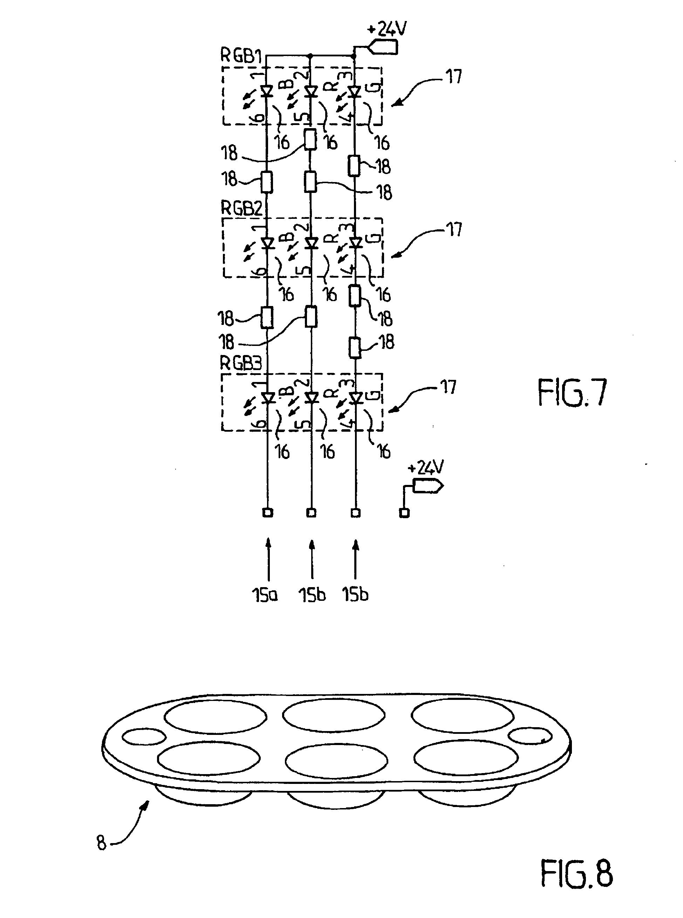

Tel que visible sur la figure 7, les organes d'éclairage 16 de chaque couleur sont montés en série. Pour ajuster l'intensité lumineuse de chacune des couleurs des résistances 18 sont montées en série avec les organes d'éclairage 16.

Le dispositif de commande 14 présente au moins une première configuration de fonctionnement mettant en oeuvre le premier dispositif d'éclairage 15a prévu pour éclairer au moins partiellement le réservoir d'eau 2 avec une couleur bleue. La première configuration de fonctionnement correspond à la position du curseur 40 en regard du pictogramme 41a et se rapporte à un programme de cuisson de poisson présentant une durée de chauffe préprogrammée de 15 min. Dans la première configuration de fonctionnement, le premier dispositif d'éclairage 15a est alimenté à pleine puissance, le deuxième dispositif d'éclairage 15b et le troisième dispositif d'éclairage 15c n'étant pas alimentés.

Le dispositif de commande 14 présente une deuxième configuration de fonctionnement mettant en oeuvre le deuxième dispositif d'éclairage 15b prévu pour éclairer au moins partiellement le réservoir d'eau 2 avec une couleur rouge. La deuxième configuration de fonctionnement correspond à la position du curseur 40 en regard du pictogramme 41f et se rapporte à un programme de cuisson d'entremets présentant une durée de chauffe préprogrammée de 17 min. Si désiré l'accessoire de cuisson 8 peut être utilisé pour réaliser des entremets en portions séparées. Dans la deuxième configuration de fonctionnement, le deuxième dispositif d'éclairage 15b est alimenté à pleine puissance, le premier dispositif d'éclairage 15a et le troisième dispositif d'éclairage 15c n'étant pas alimentés.

Le dispositif de commande 14 présente une troisième configuration de fonctionnement mettant en oeuvre le troisième dispositif d'éclairage 15c prévu pour éclairer au moins partiellement le réservoir d'eau 2 avec une couleur verte. La troisième configuration de fonctionnement correspond à la position du curseur 40 en regard du pictogramme 41c et se rapporte à un programme de cuisson pour les féculents tels que les pommes de terre, présentant une durée de chauffe préprogrammée de 30 min. Dans la troisième configuration de fonctionnement, le troisième dispositif d'éclairage 15c est alimenté à pleine puissance, le premier dispositif d'éclairage 15a et le deuxième dispositif d'éclairage 15b n'étant pas alimentés.

Le dispositif de commande 14 présente une quatrième configuration de fonctionnement mettant en oeuvre le premier dispositif d'éclairage 15a et le deuxième dispositif d'éclairage 15b, pour éclairer au moins partiellement le réservoir d'eau 2 avec une couleur violette. La quatrième configuration de fonctionnement correspond à la position du curseur 40 en regard du pictogramme 41d et se rapporte à un programme de cuisson pour les viandes telle que le poulet, présentant une durée de chauffe préprogrammée de 35 min. Dans la quatrième configuration de fonctionnement, le premier dispositif d'éclairage 15a et le deuxième dispositif d'éclairage sont alimentés à pleine puissance, le troisième dispositif d'éclairage 15c n'étant pas alimenté.

Le dispositif de commande 14 présente une cinquième configuration de fonctionnement et une sixième configuration de fonctionnement mettant en oeuvre le deuxième dispositif d'éclairage 15a et le troisième dispositif d'éclairage 15c, pour éclairer au moins partiellement le réservoir d'eau 2 respectivement avec une couleur jaune et avec une couleur orange.

La cinquième configuration de fonctionnement correspond à la position du curseur 40 en regard du pictogramme 41e et se rapporte à un programme de cuisson pour le riz et les céréales, présentant une durée de chauffe préprogrammée de 40 min. Dans la cinquième configuration de fonctionnement, le premier dispositif d'éclairage 15a n'est pas alimenté, le deuxième dispositif d'éclairage et le troisième dispositif d'éclairage étant alimentés à puissance réduite, respectivement aux trois quarts de la puissance pour le deuxième dispositif d'éclairage 15b et à mi puissance pour le troisième dispositif d'éclairage 15c.

La sixième configuration de fonctionnement correspond à la position du curseur 40 en regard du pictogramme 41b et se rapporte à un programme de cuisson pour les légumes tels que les carottes présentant une durée de chauffe préprogrammée de 35 min. Dans la sixième configuration de fonctionnement, le premier dispositif d'éclairage 15a n'est pas alimenté, le deuxième dispositif d'éclairage est alimenté à pleine puissance, et le troisième dispositif d'éclairage 15c est alimenté à une puissance réduite correspondant au quart de la pleine puissance, pour obtenir un éclairage de couleur orange.

L'alimentation à puissance réduite peut notamment être obtenue par une alternance d'alimentation à pleine puissance et d'absence d'alimentation, la durée cumulée de l'alimentation à pleine puissance et de l'absence d'alimentation étant choisie suffisamment réduite pour éviter les phénomènes de clignotement des organes d'éclairage 16. En alternative, l'alimentation à puissance réduite pourrait être obtenue avec l'envoi dans le ou les organes d'éclairage concernés d'un courant moins important que pour l'alimentation à pleine puissance.

L'organe de commande 19 est susceptible d'occuper plusieurs positions correspondant à chacune à l'une des configurations de fonctionnement précitées. Le dispositif de commande 14 comporte des indicateurs colorés 49 indiquant chacun une des positions de l'organe de commande 19. La couleur de chacun des indicateurs colorés 49 correspond à la couleur d'éclairage du réservoir d'eau 2 définie par la configuration de fonctionnement sélectionnée par la position de l'organe de commande 19. Les indicateurs colorés 49 sont avantageusement formés par les pictogrammes 41a, 41b, 41c, 41d, 41e, 41f.

Le microcontrôleur gère l'alimentation du premier dispositif d'éclairage 15a et/ou du deuxième dispositif d'éclairage 15b et/ou du troisième dispositif d'éclairage 15c selon la configuration de fonctionnement sélectionnée par la position de l'organe de commande 19, en prenant en compte le cas échéant l'actionnement de la touche de décongélation 45, et/ou de la touche de maintien au chaud 46.

L'appareil électrique de cuisson selon l'invention fonctionne et s'utilise de la manière suivante.

L'utilisateur sélectionne un programme de cuisson en plaçant l'organe de commande 19 en regard d'un des pictogrammes 41a, 41b, 41c, 41d, 41e, 41f. L'utilisateur ajuste si nécessaire le temps de cuisson à la hausse et/ou à la baisse avec les touches de réglage 43, 44.

L'utilisateur peut configurer l'appareil pour une utilisation avec des aliments surgelés en appuyant sur la touche de décongélation 45. La durée de cuisson correspondant au programme sélectionné est alors prolongée par exemple d'une dizaine de minutes.

Lorsque l'utilisateur appuie sur la touche marche/arrêt 47, le moyen de chauffe 9 est alimenté et porte à ébullition l'eau contenue dans le réservoir d'eau 2, et le réservoir d'eau 2 est éclairé par le ou les dispositifs d'éclairage 15a, 15b, 15c correspondant au programme de cuisson sélectionné. La couleur d'éclairage du réservoir d'eau 2 correspond à la couleur du pictogramme 41a, 41b, 41c, 41d, 41e, 41f du programme de cuisson sélectionné. L'utilisateur peut s'apercevoir plus facilement d'une sélection erronée d'un programme de cuisson grâce à la mémorisation des couleurs associées aux programmes de cuisson, définies par les indicateurs colorés 49. De préférence au moins certaines couleurs sont choisies pour représenter les aliments visés par le programme de cuisson correspondant de manière très intuitive. L'utilisateur peut ainsi mémoriser plus facilement les autres couleurs. L'éclairage du réservoir d'eau 2 est interrompu lorsque le programme associé à la configuration de fonctionnement sélectionnée est achevé.

L'utilisateur peut configurer l'appareil pour obtenir un maintien au chaud des aliments après la cuisson en appuyant sur la touche de maintien au chaud 46. La durée maximale de maintien au chaud est par exemple d'une heure. De préférence, en configuration de maintien au chaud la puissance de chauffe moyenne est réduite, le moyen de chauffe 9 pouvant par exemple être alimenté de manière intermittente. Selon une forme de réalisation préférée, lorsqu'un maintien au chaud a été sélectionné, l'éclairage du réservoir d'eau 2 est poursuivi de manière intermittente lorsque le programme de cuisson associé à la configuration de fonctionnement sélectionnée est achevé. L'éclairage du réservoir d'eau 2 peut alors par exemple consister en une succession d'une phase d'éclairage à pleine puissance, suivie d'une phase d'éclairage à puissance décroissante, et d'une phase d'éclairage à puissance croissante, pour retrouver la pleine puissance, sur une période de 2 à 5 secondes.

A titre de variante, les organes d'éclairage 16 n'appartiennent pas nécessairement à une ou des diodes électroluminescentes trichromiques de type RGB, des diodes électroluminescentes monochromiques peuvent aussi être envisagées.

A titre de variante, les dispositifs d'éclairage 15a, 15b, 15c n'utilisent pas nécessairement des organes d'éclairage 16 de type diode électroluminescente. Des organes d'éclairage de type lampe néon peuvent également être envisagés.

A titre de variante, les dispositifs d'éclairage 15a, 15b, 15c n'utilisent pas nécessairement des organes d'éclairage 16 colorés. Les dispositifs d'éclairage 15a, 15b, 15c peuvent utiliser des organes d'éclairage 16 de même couleur, par exemple de couleur blanche, chaque dispositif d'éclairage comportant un filtre coloré associé à l'organe d'éclairage 16.

A titre de variante, l'organe de commande 19 n'est pas nécessairement formé par un curseur linéaire, mais peut notamment être formé par un bouton rotatif ou par un clavier à touches mécaniques ou sensitives, chaque touche correspondant de préférence à l'une des configurations de commande du dispositif de commande.

A titre de variante, le moyen de chauffe 9 peut comporter plusieurs éléments chauffants.

A titre de variante, le dispositif de commande 14 peut présenter entre deux et huit indicateurs colorés correspondant aux couleurs d'éclairage du réservoir d'eau 2, et de préférence entre trois et six indicateurs colorés correspondant aux couleurs d'éclairage du réservoir d'eau 2.

A titre de variante, le récipient de cuisson 4 peut reposer directement sur le boîtier 1. Le cuiseur vapeur électrique ne comporte pas nécessairement de bac récupérateur à jus 3 disposé sur le boîtier 1.

A titre de variante, le cuiseur vapeur électrique ne comporte pas nécessairement plusieurs récipients de cuisson 4, 5, 6 superposés. Le cuiseur vapeur électrique peut notamment comporter un seul bol de cuisson, ou encore un ou plusieurs bols de cuisson logés dans le boîtier 1.

A titre de variante, la ou les parties latérales transparentes et/ou translucides du réservoir d'eau 2 ne sont pas nécessairement réalisées en matière plastique, mais pourraient notamment être réalisées en verre.

La présente invention n'est nullement limitée à l'exemple de réalisation décrit et à ses variantes, mais englobe de nombreuses modifications dans le cadre des revendications.

## Revendications

1. Boîtier (1) de cuiseur vapeur électrique, comportant un réservoir d'eau (2) associé à un moyen de chauffe (9), le réservoir d'eau (2) présentant au moins une partie latérale transparente et/ou translucide (23), un premier dispositif d'éclairage (15a) étant prévu pour éclairer au moins partiellement le réservoir d'eau (2), ledit boîtier (1) comportant un dispositif de commande (14) présentant au moins une première configuration de fonctionnement mettant en oeuvre le premier dispositif d'éclairage (15a) et une deuxième configuration de fonctionnement mettant en oeuvre un deuxième dispositif d'éclairage (15b) prévu pour éclairer au moins partiellement le réservoir d'eau (2), la couleur d'éclairage du premier dispositif d'éclairage (15a) étant différente de la couleur d'éclairage du deuxième dispositif d'éclairage (15b), **caractérisé en ce que** le dispositif de commande (14) comporte un organe de commande (19) prévu pour sélectionner des programmes de cuisson, et **en ce que** le réservoir d'eau (2) est éclairé par le ou les dispositifs d'éclairage (15a, 15b) correspondant au programme de cuisson sélectionné.

2. Boîtier (1) de cuiseur vapeur électrique selon la revendication 1, **caractérisé en ce que** la partie transparente et/ou translucide (23) présente un espace (26) s'étendant entre une paroi latérale externe (22) et une paroi latérale interne (21) du réservoir d'eau (2), les premier et deuxième dispositifs d'éclairage (15a, 15b) étant agencés dans l'espace (26).

3. Boîtier (1) de cuiseur vapeur électrique selon la revendication 2, **caractérisé en ce qu'**une paroi de diffusion de lumière (25) est agencée entre la paroi latérale interne (21) et les premier et deuxième dispositifs d'éclairage (15a, 15b).

4. Boîtier (1) de cuiseur vapeur électrique selon l'une des revendications 1 à 3, **caractérisé en ce que** le premier dispositif d'éclairage (15a) et le deuxième dispositif d'éclairage (15b) utilisent chacun plusieurs organes d'éclairage (16).

5. Boîtier (1) de cuiseur vapeur électrique selon l'une des revendications 1 à 4, **caractérisé en ce que** le premier dispositif d'éclairage (15a) et le deuxième dispositif d'éclairage (15b) utilisent chacun au moins un organe d'éclairage (16) de type diode électroluminescente.

6. Boîtier (1) de cuiseur vapeur électrique selon la revendication 5, **caractérisé en ce que** le ou au moins l'un des organes d'éclairage (16) du premier dispositif d'éclairage (15a) et le ou au moins l'un des organes d'éclairage (16) du deuxième dispositif d'éclairage (15b) appartiennent à au moins une diode électroluminescente trichromique de type RGB (17).

7. Boîtier (1) de cuiseur vapeur électrique selon l'une des revendications 1 à 6, **caractérisé en ce que** le dispositif de commande (14) présente une troisième configuration de fonctionnement mettant en oeuvre un troisième dispositif d'éclairage (15c) prévu pour éclairer au moins partiellement le réservoir d'eau (2), la couleur d'éclairage du troisième dispositif d'éclairage (15c) étant différente de la couleur d'éclairage du premier dispositif d'éclairage (15a) et de la couleur d'éclairage du deuxième dispositif d'éclairage (15b).

8. Boîtier (1) de cuiseur vapeur électrique selon la revendication 7, **caractérisé en ce que** le troisième dispositif d'éclairage (15c) utilise au moins un organe d'éclairage (16) de type diode électroluminescente.

9. Boîtier (1) de cuiseur vapeur électrique selon la revendication 8, **caractérisé en ce que** le ou au moins l'un des organes d'éclairage (16) du premier dispositif d'éclairage (15a), le ou au moins l'un des organes d'éclairage (16) du deuxième dispositif d'éclairage (15b) et le ou au moins l'un des organes d'éclairage (16) du troisième dispositif d'éclairage (15c) appartiennent à au moins une diode électroluminescente trichromique de type RGB (17).

10. Boîtier (1) de cuiseur vapeur électrique selon l'une des revendications 7 à 9, **caractérisé en ce que** le dispositif de commande (14) présente une quatrième configuration de fonctionnement mettant en oeuvre le premier dispositif d'éclairage (15a) et le deuxième dispositif d'éclairage (15b).

11. Boîtier (1) de cuiseur vapeur électrique selon la revendication 10, **caractérisé en ce que** le dispositif de commande (14) présente une cinquième configuration de fonctionnement mettant en oeuvre le deuxième dispositif d'éclairage (15b) à puissance réduite et le troisième dispositif d'éclairage (15c) à puissance réduite.

12. Boîtier (1) de cuiseur vapeur électrique selon la revendication 11, **caractérisé en ce que** le dispositif de commande (14) présente une sixième configuration de fonctionnement mettant en oeuvre le deuxième dispositif d'éclairage (15b) à pleine puissance et le troisième dispositif d'éclairage (15c) à puissance réduite.

13. Boîtier (1) de cuiseur vapeur électrique selon l'une des revendications 1 à 12, **caractérisé en ce que** l'organe de commande (19) est susceptible d'occuper plusieurs positions correspondant chacune à l'une des configurations de fonctionnement précitées, le dispositif de commande (14) comprenant des indicateurs colorés (49) indiquant chacun une des positions de l'organe de commande (19), la couleur de chacun des indicateurs colorés (49) correspondant à la couleur d'éclairage du réservoir d'eau (2) définie par la configuration de fonctionnement sélectionnée par la position de l'organe de commande (19).

14. Boîtier (1) de cuiseur vapeur électrique selon l'une des revendications 1 à 13, **caractérisé en ce que** l'éclairage du réservoir d'eau (2) est interrompu lorsque le programme de cuisson associé à la configuration de fonctionnement sélectionnée est achevé.

15. Boîtier (1) de cuiseur vapeur électrique selon l'une des revendications 1 à 13, **caractérisé en ce que** l'éclairage du réservoir d'eau (2) est poursuivi de manière intermittente lorsque le programme de cuisson associé à la configuration de fonctionnement sélectionnée est achevé et qu'un maintien au chaud a été sélectionné.

16. Cuiseur vapeur électrique comprenant un boîtier (1) comportant un réservoir d'eau (2) associé à un moyen de chauffe (9) et au moins un récipient de cuisson (4 ; 5 ; 6), **caractérisé en ce que** le boîtier (1) est conforme à l'une des revendications 1 à 15.

## Patentansprüche

1. Gehäuse (1) eines elektrischen Dampfgarers, das Folgendes umfasst: einen zu Heizmitteln (9) gehörigen Wasserbehälter (2), wobei der Wasserbehälter (2) mindestens ein transparentes und/oder lichtdurchlässiges Seitenteil (23) aufweist, eine erste Beleuchtungsvorrichtung (15a), die für die zumindest teilweise Beleuchtung des Wasserbehälters (2) vorgesehen ist, wobei das genannte Gehäuse (1) eine Steuereinrichtung (14) umfasst, die zumindest eine erste Betriebskonfiguration, die die erste Beleuchtungsvorrichtung (15a) aktiviert, und eine zweite Betriebskonfiguration aufweist, die eine zweite Beleuchtungsvorrichtung (15b) aktiviert, die für die zumindest teilweise Beleuchtung des Wasserbehälters (2) vorgesehen ist, wobei sich die Beleuchtungsfarbe der ersten Beleuchtungsvorrichtung (15a) von der Beleuchtungsfarbe der zweiten Beleuchtungsvorrichtung (15b) unterscheidet, **dadurch gekennzeichnet, dass** die Steuereinrichtung (14) ein Bedienelement (19) umfasst, das für das Auswählen der Garprogramme vorgesehen ist, und **dadurch gekennzeichnet, dass** der Wasserbehälter (2) durch die Beleuchtungsvorrichtung(en) (15a, 15b) entsprechend dem ausgewählten Garprogramm beleuchtet wird.

2. Gehäuse (1) eines elektrischen Dampfgarers nach Anspruch 1, **dadurch gekennzeichnet, dass** der transparente und/oder lichtdurchlässige Teil (23) einen Zwischenraum (26) aufweist, der sich zwischen einer äußeren Seitenwand (22) und einer inneren Seitenwand (21) des Wasserbehälters (2) erstreckt, wobei die erste und die zweite Beleuchtungsvorrichtung (15a, 15b) in dem Zwischenraum (26) angeordnet sind.

3. Gehäuse (1) eines elektrischen Dampfgarers nach Anspruch 2, **dadurch gekennzeichnet, dass** eine das Licht streuende Wand (25) zwischen der inneren Seitenwand (21) und der ersten und zweiten Beleuchtungsvorrichtung (15a, 15b) angeordnet ist.

4. Gehäuse (1) eines elektrischen Dampfgarers nach einem der Ansprüche 1 bis 3, **dadurch gekennzeichnet, dass** die erste Beleuchtungsvorrichtung (15a) und die zweite Beleuchtungsvorrichtung (15b) jeweils mehrere Beleuchtungselemente (16) nutzen.

5. Gehäuse (1) eines elektrischen Dampfgarers nach einem der Ansprüche 1 bis 4, **dadurch gekennzeichnet, dass** die erste Beleuchtungsvorrichtung (15a) und die zweite Beleuchtungsvorrichtung (15b) jeweils zumindest ein Beleuchtungselement (16) vom Typ einer Leuchtdiode nutzen.

6. Gehäuse (1) eines elektrischen Dampfgarers nach Anspruch 5, **dadurch gekennzeichnet dass** das oder zumindest eines der Beleuchtungselemente (16) der ersten Beleuchtungsvorrichtung (15a) und das oder zumindest eines der Beleuchtungselemente (16) der zweiten Beleuchtungsvorrichtung (15b) zu zumindest einer dreifarbigen Leuchtdiode vom Typ RGB (17) gehören.

7. Gehäuse (1) eines elektrischen Dampfgarers nach einem der Ansprüche 1 bis 6, **dadurch gekennzeichnet, dass** die Steuereinrichtung (14) eine dritte Betriebskonfiguration aufweist, die eine dritte Beleuchtungsvorrichtung (15c) aktiviert, die für die zumindest teilweise Beleuchtung des Wasserbehälters (2) vorgesehen ist, wobei sich die Beleuchtungsfarbe der dritten Beleuchtungsvorrichtung (15c) von der Beleuchtungsfarbe der ersten Beleuchtungsvorrichtung (15a) und von der Beleuchtungsfarbe der zweiten Beleuchtungsvorrichtung (15b) unterscheidet.

8. Gehäuse (1) eines elektrischen Dampfgarers nach Anspruch 7, **dadurch gekennzeichnet, dass** die dritte Beleuchtungsvorrichtung (15c) zumindest ein Beleuchtungselement (16) vom Typ einer Leuchtdiode nutzt.

9. Gehäuse (1) eines elektrischen Dampfgarers nach Anspruch 8, **dadurch gekennzeichnet, dass** das oder zumindest eines der Beleuchtungselemente (16) der ersten Beleuchtungsvorrichtung (15a), das oder zumindest eines der Beleuchtungselemente (16) der zweiten Beleuchtungsvorrichtung (15b) und das oder zumindest eines der Beleuchtungselemente (16) der dritten Beleuchtungsvorrichtung (15c) zu zumindest einer dreifarbigen Leuchtdiode vom Typ RGB (17) gehören.

10. Gehäuse (1) eines elektrischen Dampfgarers nach einem der Ansprüche 7 bis 9, **dadurch gekennzeichnet, dass** die Steuereinrichtung (14) eine vierte Betriebskonfiguration aufweist, die die erste Beleuchtungsvorrichtung (15a) und die zweite Beleuchtungsvorrichtung (15b) aktiviert.

11. Gehäuse (1) eines elektrischen Dampfgarers nach Anspruch 10, **dadurch gekennzeichnet, dass** die Steuereinrichtung (14) eine fünfte Betriebskonfiguration aufweist, die die zweite Beleuchtungsvorrichtung (15b) mit verringerter Leistung und die dritte Beleuchtungsvorrichtung (15c) mit verringerter Leistung aktiviert.

12. Gehäuse (1) eines elektrischen Dampfgarers nach Anspruch 11, **dadurch gekennzeichnet, dass** die Steuereinrichtung (14) eine sechste Betriebskonfiguration aufweist, die die zweite Beleuchtungsvorrichtung (15b) mit voller Leistung und die dritte Beleuchtungsvorrichtung (15c) mit verringerter Leistung aktiviert.

13. Gehäuse (1) eines elektrischen Dampfgarers nach einem der Ansprüche 1 bis 12, **dadurch gekennzeichnet, dass** das Bedienelement (19) mehrere Stellungen einnehmen kann, die jeweils einer der vorgenannten Betriebskonfigurationen entsprechen, wobei die Steuereinrichtung (14) farbige Anzeigen (49) umfasst, die jeweils eine der Stellungen des Bedienelements (19) anzeigen und wobei die Farbe jeder der farbigen Anzeigen (49) der Farbe der Beleuchtung des Wasserbehälters (2) entspricht, die durch die anhand der Stellung des Bedienelements (19) ausgewählte Betriebskonfiguration festgelegt wird.

14. Gehäuse (1) eines elektrischen Dampfgarers nach einem der Ansprüche 1 bis 13, **dadurch gekennzeichnet, dass** die Beleuchtung des Wasserbehälters (2) unterbrochen wird, wenn das der ausgewählten Betriebskonfiguration zugeordnete Garprogramm beendet ist.

15. Gehäuse (1) eines elektrischen Dampfgarers nach einem der Ansprüche 1 bis 13, **dadurch gekennzeichnet, dass** die Beleuchtung des Wasserbehälters (2) in Intervallen fortgeführt wird, wenn das der ausgewählten Betriebskonfiguration zugeordnete Garprogramm beendet ist und eine Warmhaltefunktion ausgewählt wurde.

16. Elektrischer Dampfgarer mit einem Gehäuse (1), das einen zu Heizmitteln (9) gehörigen Wasserbehälter (2) und zumindest einen Garbehälter (4, 5, 6) umfasst, **dadurch gekennzeichnet, dass** das Gehäuse (1) einem der Ansprüche 1 bis 15 entspricht.

## Claims

1. Housing (1) of electric steamer comprising a water tank (2) associated with a heating means (9), the water tank (2) having at least one transparent and/or translucent side portion (23), a first lighting device (15a) being provided to illuminate at least partially the water tank (2), said housing (1) comprising a control device (14) having at least a first operating configuration utilising the first lighting device (15a) and a second operating configuration utilising a second lighting device (15b) provided to illuminate at least partially the water tank (2), the illumination colour of the first lighting device (15a) being different from the illumination colour of the second lighting device (15b), **characterised in that** the control device (14) comprises a control member (19) provided for selecting cooking programs, and **in that** the water tank (2) is illuminated by the lighting device(s) (15a, 15b) corresponding to the cooking programme selected.

2. Housing (1) of electric steamer according to claim 1, **characterised in that** the transparent and/or translucent portion (23) has a space (26) extending between an outer side wall (22) and an inner side wall (21) of the water tank (2), the first and second lighting devices (15a, 15b) being arranged in the space (26).

3. Housing (1) of electric steamer according to claim 2, **characterised in that** a light diffusing wall (25) is arranged between the inner side wall (21) and the first and second lighting devices (15a, 15b).

4. Housing (1) of electric steamer according to one of claims 1 to 3, **characterised in that** the first lighting device (15a) and the second lighting device (15b) each using several lighting means (16).

5. Housing (1) of electric steamer according to one of claims 1 to 4, **characterised in that** the first lighting device (15a) and the second lighting device (15b) each use at least one light emitting diode-type lighting means (16).

6. Housing (1) of electric steamer according to claim 5, **characterised in that** the or at least one of the lighting means (16) of the first lighting device (15a) and the or at least one of lighting means (16) of the second lighting device (15b) belong to at least one three-colour RGB type light emitting diode (17).

7. Housing (1) of electric steamer according to one of claims 1 to 6, **characterised in that** the control device (14) has a third operating configuration using a third lighting device (15c) provided for illuminating at least partially the water tank (2), the illumination colour of the third lighting device (15c) being different from the illumination colour of the first lighting device (15a) and the illumination colour of the second lighting device (15b).

8. Housing (1) of electric steamer according to claim 7, **characterised in that** the third lighting device (15c) uses at least one light emitting diode-type lighting means (16).

9. Housing (1) of electric steamer according to claim 8, **characterised in that** the or at least one of the lighting means (16) of the first lighting device (15a), the or at least one of the lighting means (16) of the second lighting device (15b) and the or at least one of the lighting means (16) of the third lighting device (15c) belong to at least one three-colour RGB type light emitting diode (17).

10. Housing (1) of electric steamer according to one of claims 7 to 9, **characterised in that** the control device (14) has a fourth operating configuration implementing the first lighting device (15a) and the second lighting device (15b).

11. Housing (1) of electric steamer according to claim 10, **characterised in that** the control device (14) has a fifth operating configuration implementing the second lighting device (15b) at reduced power and the third lighting device (15c) at reduced power.

12. Housing (1) of electric steamer according to claim 11, **characterised in that** the control device (14) has a sixth operating configuration implementing the second lighting device (15b) at full power and the third lighting device (15c) at reduced power.

13. Housing (1) of electric steamer according to one of claims 1 to 12, **characterised in that** the control member (19) is capable of occupying several positions, each corresponding to one of the aforementioned operating configurations, the control device (14) comprising coloured indicators (49) each indicating a position of the control member (19), the colour of each of the coloured indicators (49) corresponding to the illumination colour of the water tank (2) defined by the operating configuration selected by the position of the control member (19).

14. Housing (1) of electric steamer according to one of claims 1 to 13, **characterised in that** the illumination of the water tank (2) is interrupted when the cooking programme associated with the selected operating configuration is completed.

15. Housing (1) of electric steamer according to one of claims 1 to 13, **characterised in that** the illumination of the water tank (2) is continued intermittently when the cooking programme associated with the selected operating configuration is completed and that a keep-hot function has been selected.

16. Electric steam cooker comprising a housing (1) having a water tank (2) associated with a heating means (9) and at least one cooking container (4; 5; 6), **characterised in that** the housing (1) complies with one of claims 1 to 15.
